# EUROPEAN PATENT APPLICATION

(11) **EP 0 967 757 A2**
(43) Date of publication of application: **29.12.1999**
(21) Application number: 99304526.9
(22) Date of filing: 10.06.1999
(51) Int. Cl.: H04L 12/28, H04L 29/12, H04B 1/20

(54) **Information processing apparatus and method and computer program for enabling a function change**

(30) Priority: 16.06.1998 JP 16795598
(71) Applicant: SONY CORPORATION, Tokyo 141 (JP)
(72) Inventor: Kawamura, Harumi, c/o Int. Prop. Dept., Sony Corp., Shinagawa-ku, Tokyo 141 (JP); Endo, Atsushi, c/o Int. Property Dept., Sony Corp., Shinagawa-ku, Tokyo 141 (JP)
(74) Representative: Horner, David Richard

(57) **Abstract**

In an embodiment of the present invention, the control section of a tuner reads the subunit identifier descriptor of a digital video cassette recorder (DVCR) through an IEEE 1394 bus in a step S1, and a procedure proceeds to a step S2. In the step S2, the control section determines whether the DVCR is an audio-visual (AV) unit of new type. When it is determined that the DVCR is an AV unit of old type, the processing is finished. When it is determined that the DVCR is a new-type unit, the control section sends a NOTIFY command to the DVCR in a step S3. In a step S4, the control section receives an INTERIM response from the DVCR, which indicates that the DVCR has received the NOTIFY command. The control section determines in a step S5 whether it receives a CHANGED response, which shows that a function has been changed. If it is determined that a CHANGED response has not been received, the step S5 is repeated. When it is determined that a CHANGED response has been received, the processing returns to the step S1, and the subsequent steps are repeated.

## Description

### BACKGROUND OF THE INVENTION

### 1. Field of the Invention

The present invention relates to information processing apparatus and methods, providing media and computer programs for enabling a change in a function to be detected.

### 2. Description of the Related Art

An AV/C command set is specified for controlling AV units connected through the IEEE 1394 bus. In the AV/C command set, a descriptor is provided in order to show various pieces of information of a unit to any other unit. The term "unit" indicates a unit itself and the term "subunit" indicates a function of a unit, in the AV/C command set. A function of a unit is described in a subunit identifier descriptor.

It is conventionally considered that a function of a unit is fixed in general, and when a subunit identifier descriptor, which indicates a function of a unit, is once specified, it does not change. Therefore, among AV units, a controller unit (unit which accesses any other AV unit) reads the subunit identifier descriptor of a target unit (unit which is accessed from any other AV unit) only once when the system is built up.

In the above system, when a function of the target unit is changed due to downloaded software or a mounted Memory Stick, for example, the subunit identifier descriptor is also changed accordingly.

In the conventional system, since the controller unit reads the subunit identifier descriptor of the target unit only once when the system is built up, however, even if the subunit identifier descriptor is changed, the change cannot be detected.

An object of the present invention is to allow a controller unit, when a function of a target unit is changed, to detect the change.

### SUMMARY OF THE INVENTION

In accordance with one aspect of the present invention, there is provided an information processing apparatus connectable to any other information processing apparatus through a bus, including: storage means for storing a function; updating means for updating the contents of the storage means according to a change of the function; and reporting means for reporting to the any other information apparatus that the updating means has updated the contents of the storage means.

In the information processing apparatus, the storage means stores a function; the updating means updates the contents of the storage means according to a change of the function; and the reporting means reports to the any other information apparatus that the updating means has updated the contents of the storage means.

Hence, when a function of a target audio-visual (AV) unit is changed in a case in which AV units are connected through an IEEE (Institute of Electrical and Electronic Engineers) 1394 bus, the present invention allows this change information to be reported to a controller unit.

In accordance with another aspect of the present invention, there is provided an information processing method for an information processing apparatus connectable to any other information processing apparatus through a bus, including: a storage step for storing a function; an updating step for updating the contents stored in the storage step, according to a change of the function; and a reporting step for reporting to the any other information processing apparatus that the contents stored in the storage step have been updated in the updating step.

In accordance with another aspect of the present invention, there is provided a computer program, or a providing medium for providing a program, which makes an information processing apparatus connected to any other information processing apparatus through a bus execute processing, the processing including: a storage step for storing a function; an updating step for updating the contents stored in the storage step, according to a change of the function; and a reporting step for reporting to the any other information processing apparatus that the contents stored in the storage step have been updated in the updating step.

In the information processing method, computer program and the providing medium, a function is stored in the storage step; the contents stored in the storage step are updated in the updating step according to a change of the function; and it is reported to the any other information processing apparatus in the reporting step that the contents stored in the storage step have been updated in the updating step.

According to the information processing apparatus, the information processing method, the computer program and the providing medium, since the contents of a storage is updated according to a change in function and the change is reported, any other information processing apparatus can detect the function change.

In accordance with yet another aspect of the present invention, there is provided an information processing apparatus connectable to any other information processing apparatus through a bus, including: inquiry means for inquiring of the any other information processing apparatus whether a function of the any other information processing apparatus has been changed; and receiving means for receiving the acknowledgment of the inquiry sent from the inquiry means, from the any other information processing apparatus.

In the information processing apparatus, the inquiry means inquires of the any other information processing apparatus whether a function of the any other information processing apparatus has been changed; and the receiving means receives the acknowledgment of the inquiry sent from the inquiry means, from the any other information processing apparatus.

In accordance with a further aspect of the present invention, there is provided an information processing method for an information processing apparatus connectable to any other information processing apparatus through a bus, including: an inquiry step for inquiring of the any other information processing apparatus whether a function of the any other information processing apparatus has been changed; and a receiving step for receiving the acknowledgment of the inquiry sent in the inquiry step, from the any other information processing apparatus.

In accordance with a still further aspect of the present invention, there is provided a computer program, or a providing medium for providing a program, which makes an information processing apparatus connected to any other information processing apparatus through a bus execute processing, the processing including: an inquiry step for inquiring of the any other information processing apparatus whether a function of the any other information processing apparatus has been changed; and a receiving step for receiving the acknowledgment of the inquiry sent in the inquiry step, from the any other information processing apparatus.

In the information processing method, the computer program and the providing medium, whether a function of the any other information processing apparatus has been changed is inquired of the any other information processing apparatus in the inquiry step; and the acknowledgment of the inquiry sent in the inquiry step is received from the any other information processing apparatus in the receiving step.

According to the information processing apparatus, the information processing method, the computer program and the providing medium, since whether a function of any other information processing apparatus has been changed can be inquired and its response can be received, control according to a function change of any other information processing apparatus is allowed.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:

Fig. 1 is a block diagram of an information processing system to which an information processing apparatus of a preferred embodiments of the present invention is applied.

Fig. 2 is a view showing a data structure of a subunit identifier descriptor.

Fig. 3 is a view showing a format of a subunit identifier descriptor.

Fig. 4 is a view showing the contents of a generation_ID field shown in Fig. 3.

Fig. 5 is a view showing the contents of a list_ID field shown in Fig. 3.

Fig. 6 is a view showing a format of a subunit identifier descriptor in a preferred embodiment of the present system.

Fig. 7 is a view showing a format of a tuner subunit identifier descriptor.

Fig. 8 is a view showing a format of a system_specification field shown in Fig. 7.

Fig. 9 is a view showing the contents of a system_id item shown in Fig. 8.

Fig. 10 is a view of a stack model of an AV/C command set.

Fig. 11 is a view showing a relationship between an FCP command and a response.

Fig. 12 is a view showing a further detailed relationship between the command and the response shown in Fig. 11.

Fig. 13 is a view showing a data structure of an AV/C command packet.

Fig. 14 is a view showing examples of AV/C commands.

Fig. 15, which includes Fig. 15A and Fig. 15B, is a view showing an AV/C command and a response.

Fig. 16, which includes Fig. 16A to Fig. 16C, is a view showing a NOTIFY command and a response.

Fig. 17 is a flowchart of processing in the controller unit.

Fig. 18 is a flowchart of processing in the target unit.

### DESCRIPTION OF THE PREFERRED EMBODIMENT

An embodiment of the present invention will be described below. To clarify the relationship between each means to be specified in the claims of the present invention and the following embodiment, the features of the present invention will be described below first with the embodiment corresponding to each means being added in parentheses after the means. This description does not mean that each means is limited to the described example.

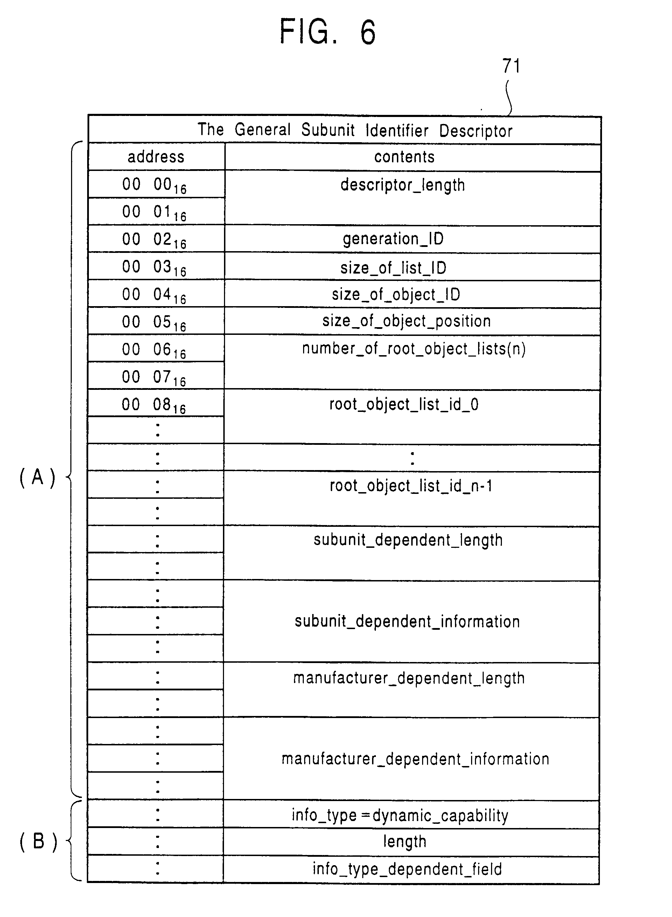

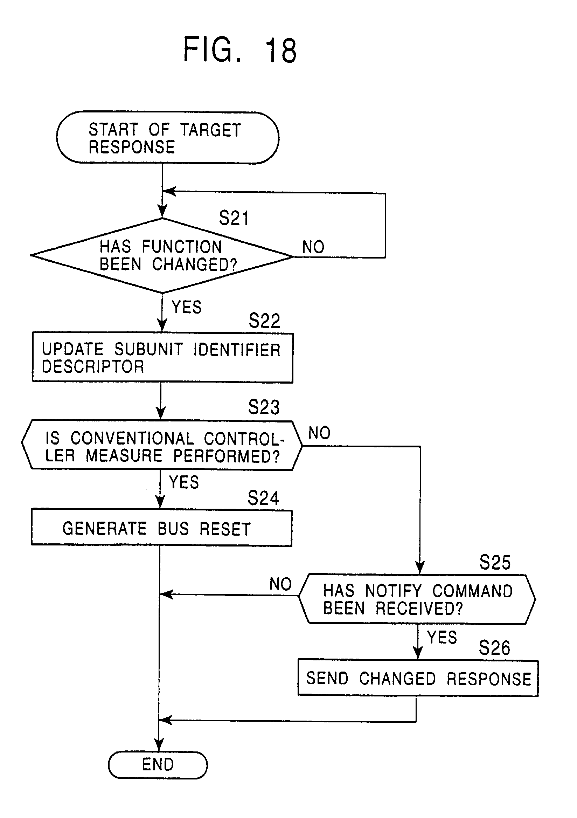

An information processing apparatus of a preferred embodiment is connectable to any other information processing apparatus through a bus, and includes: storage means (a subunit identifier descriptor 71 shown in Fig. 6, for example) for storing a function; updating means (a step S22 shown in Fig. 18, for example) for updating the contents of the storage means according to a change of the function; and reporting means (a step S26 shown in Fig. 18, for example) for reporting to the any other information apparatus that the updating means has updated the contents of the storage means.

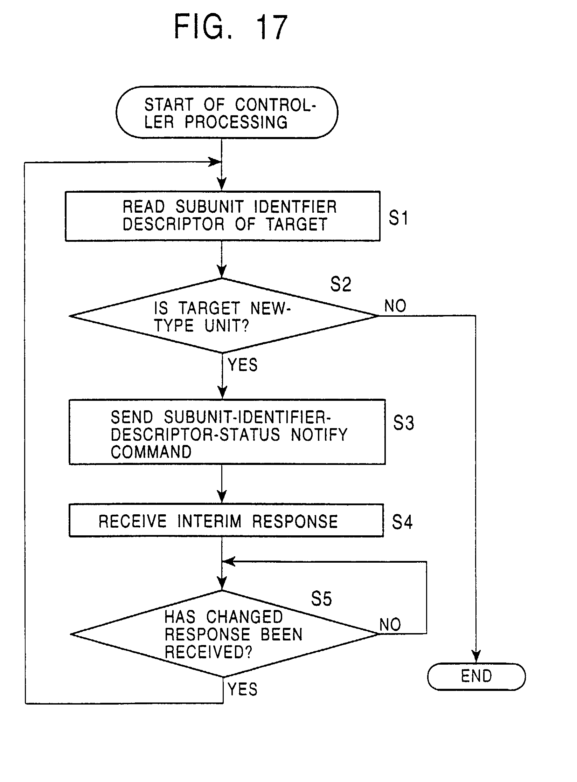

An information processing apparatus of a preferred embodiment is connectable to any other information processing apparatus through a bus, and includes: inquiry means (a step S3 shown in Fig. 17, for example) for inquiring of the any other information processing apparatus whether a function of the any other information processing apparatus has been changed; and receiving means (a step S5 shown in Fig. 17, for example) for receiving the acknowledgment of the inquiry sent from the inquiry means, from the any other information processing apparatus.

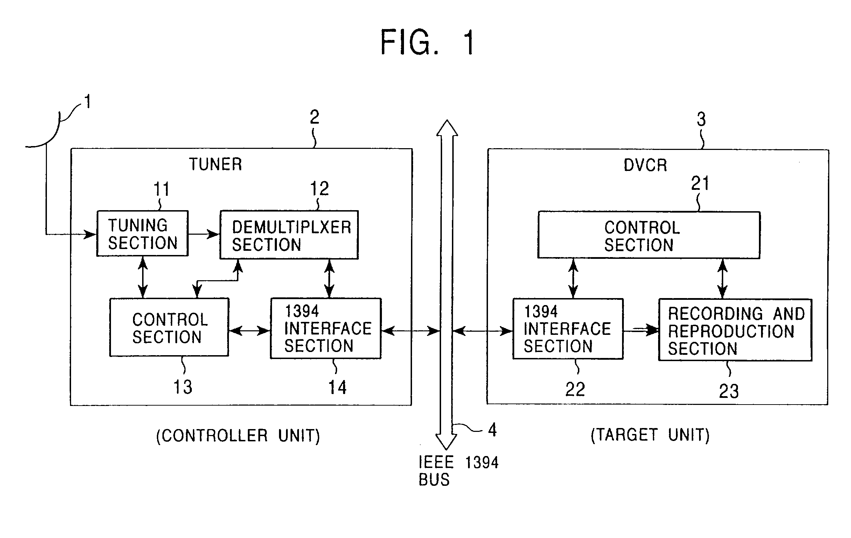

Fig. 1 is a block diagram showing a structure of an information processing system to which a preferred embodiment of the present invention is applied. In the present embodiment, a tuner 2 is connected to a digital video cassette recorder (DVCR) 3 through an IEEE 1394 bus 4. The tuner 2 serves as a controller unit and the DVCR 3 serves as a target unit. An AV/C command set is used for controlling the DVCR 3.

A tuning section 11 of the tuner 2 selects a digital broadcasting signal (multiplexed stream) and receives it through an antenna 1 according to an instruction from a control section 13. The tuning section 11 sends the received digital broadcasting signal to a demultiplexer section 12. The demultiplexer section 12 extracts a video signal and an audio signal from the sent digital broadcasting signal and outputs them to the IEEE 1394 bus through a 1394 interface section 14.

A 1394 interface section 22 of the DVCR 3 receives data on the IEEE 1394 bus according to an instruction from a control section 21. The 1394 interface section 22 sends the received data to a recording and reproduction section 23. In recording, according to an instruction from the control section 21, the recording and reproduction section 23 compresses the received video signal and the received audio signal, multiplexes them, and records them on a magnetic tape not shown. In reproduction, the recording and reproduction section 23 detects data on a magnetic tape, extracts it, decompresses it, and outputs to a unit not shown.

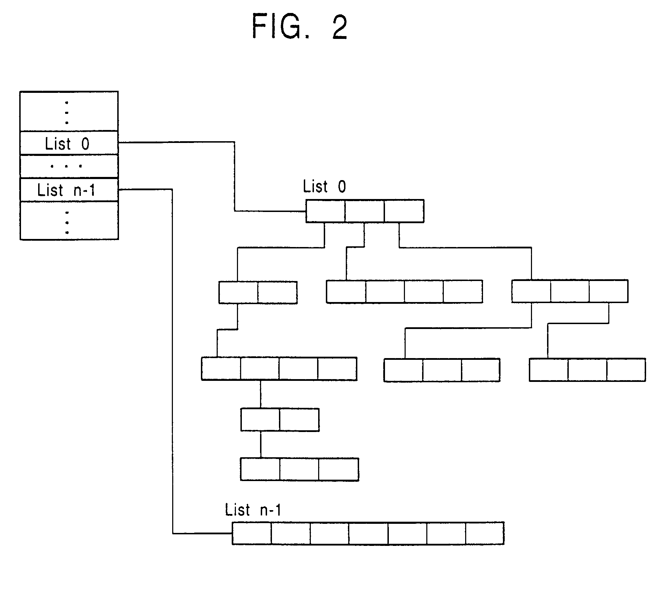

The data structure of a subunit identifier descriptor in the AV/C command set used in the information processing system shown in Fig. 1 will be described below by referring to Figs. 2 to 5. Fig. 2 shows the data structure of the subunit identifier descriptor. As shown in Fig. 2, the subunit identifier descriptor is formed of hierarchical lists. A list indicates, for example, a channel which can be received, for a tuner, and for a disk, it indicates the music recorded therein. A list at the highest layer in a hierarchical structure is called a root list. A list 0, for example, serves as the root list for its lower lists. A list 2 to list (n-1) also serve as root lists. There exist root lists corresponding to the number of objects. For example, an object is a channel in digital broadcasting when an AV unit is a tuner. All lists in one hierarchy have common information.

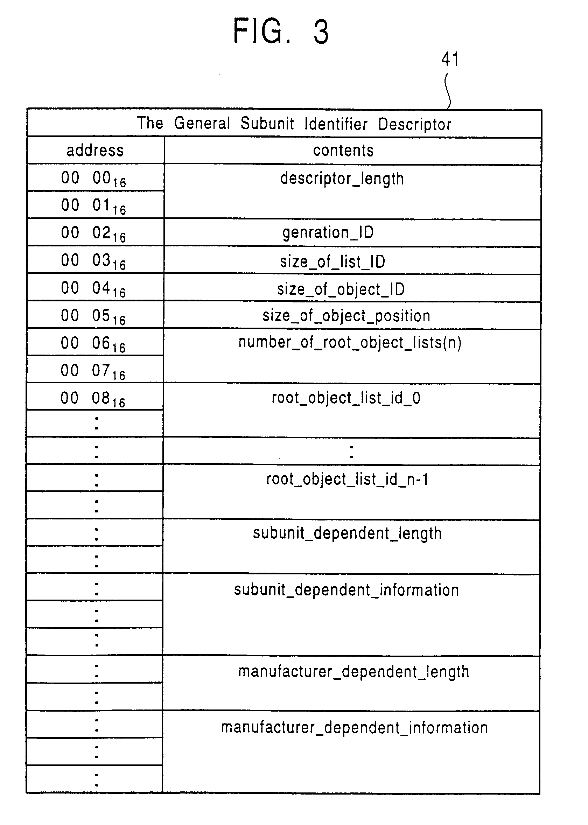

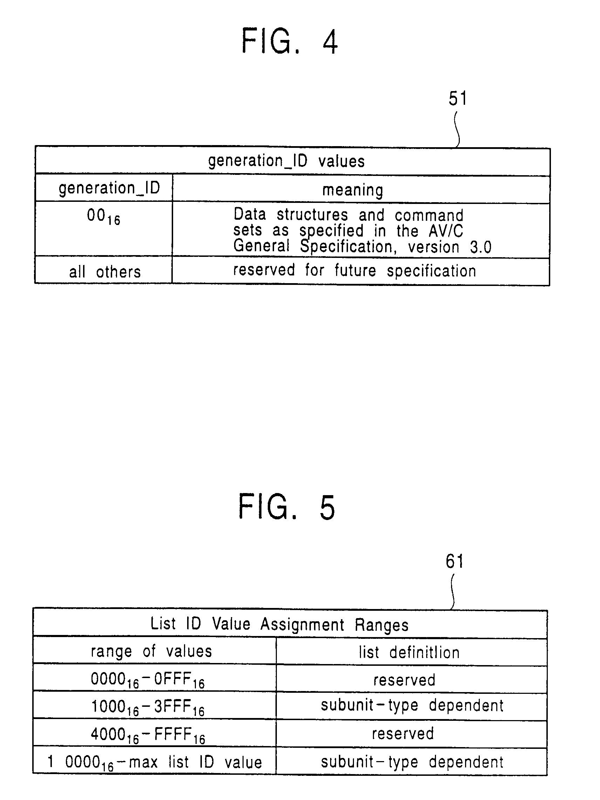

Fig. 3 is a format of a general subunit identifier descriptor 41 used in an existing system. The subunit identifier descriptor 41 has attribute information related to a function in its contents. A descriptor_length field indicates the length (the number of bytes) of the descriptor structure, excluding the length of the descriptor_length field itself. A generation_ID field shows the version of the AV/C command set, and is currently set to 00h (h indicates hexadecimal notation) as shown in Fig. 4. 00h shows that the data structure and the commands used are in the version 3.0 of the AV/C general specification. As shown in Fig. 4, all values other than 00h are reserved for future specifications.

A size_of_list_ID field indicates the byte count of a list ID. A size_of_object_ID field indicates the byte count of an object ID. A size_of_object_position field shows the position (byte count) in the list used for reference during control. A number_of_root_object_lists field indicates the number of root object lists. A root_object_list id field shows an ID for discriminating the highest root object list in a separate hierarchy.

The subunit_dependent_length field shows the byte count of the following subunit_dependent_information field. The subunit_dependent_information field indicates the information unique to a function. A manufacturer_dependent_length field shows the byte count of the following manufacturer_dependent_information field. The manufacturer_dependent_information field shows the specification information of a vendor (manufacturer). When a descriptor does not have manufacturer dependent information, the field thereof does not exist.

Fig. 5 shows list-ID assignment ranges. As shown in Fig. 5, a range of 0000h to 0FFFh and that of 4000h to FFFFh are reserved for assignment ranges for future specifications. A range of 1000h to 3FFFh and that of 10000h to the maximum list-ID value are prepared for discriminating the dependent information of function types.

A subunit identifier descriptor used in the system of a preferred embodiment of the present invention will be described below by referring to Fig. 6. Since the fields in a zone A in Fig. 6 are the same as those described with Fig. 3, descriptions thereof are omitted. A zone B in Fig. 6 shows fields added to the format shown in Fig. 3. An info_type field shows whether a function of an AV unit changes or not. A notation of info_type=dynamic_capability shows that a function of the AV unit having this notation may be changed. A length field indicates the byte count of the following info_type_dependent field. The info_type_dependent field shows the dependent information of dynamic_capability and is defined by a one-byte flag (eight flags). When a flag 0 = 0, the AV unit is considered to have static_capability (the function is fixed). When the flag 0 is 1, the AV unit is considered to have dynamic_capability (the function is dynamic). Flags 1 to 7 are reserved for future specifications. A controller unit (the tuner 2, for example) can determine whether a function of a target unit (the DVCR 3, for example) is changed or not, by referencing the info_type field of the subunit identifier descriptor 71 for the target unit.

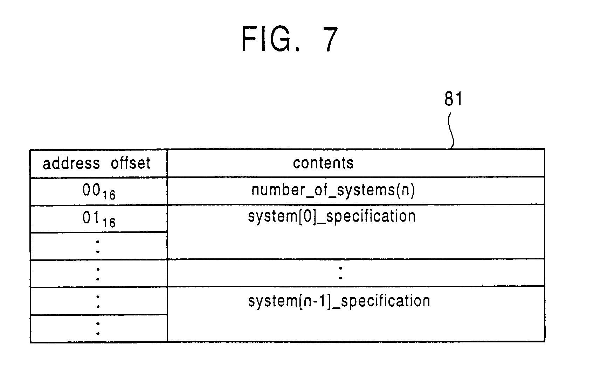

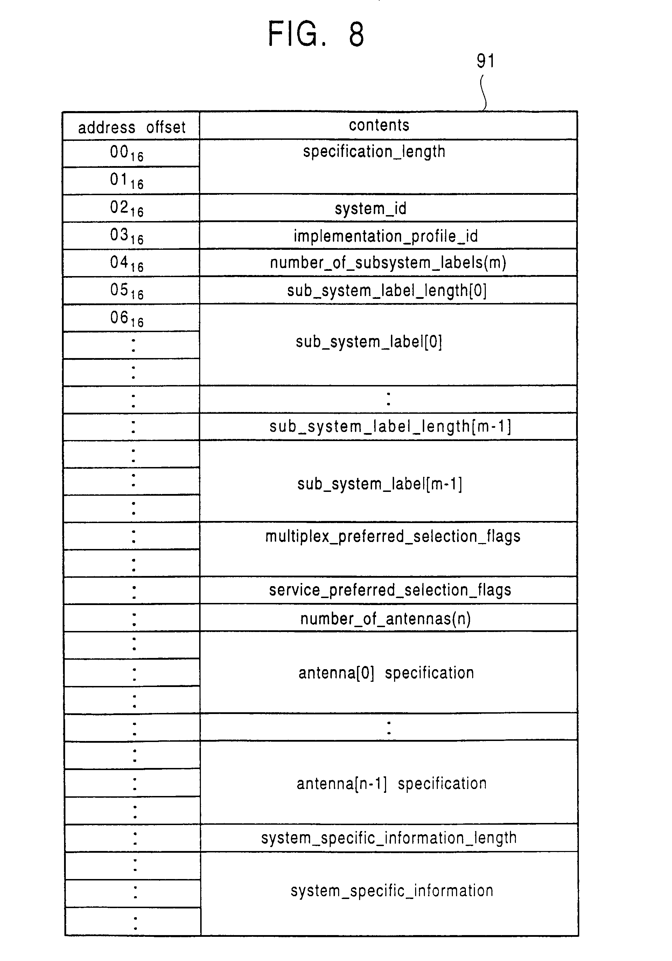

A tuner subunit identifier descriptor will be described below by referring to Figs. 7 to 9. In the tuner subunit identifier descriptor, a feature of a broadcasting system which the tuner supports is described. In a multi-system tuner, since the tuner supports two or more broadcasting systems, a plurality of object lists exist. Fig. 7 shows a format of a root object list in the tuner subunit. A number_of_systems field indicates the number of broadcasting systems which the tuner subunit supports. A system_specification field shows the specification of each broadcasting system and conforms to a format shown in Fig. 8.

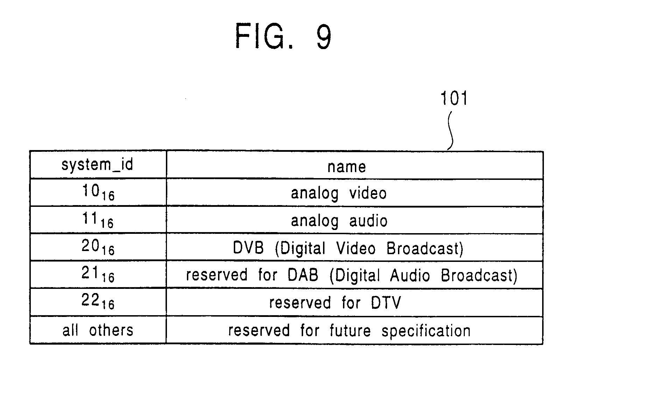

Fig. 8 shows the format of the system_specification field shown in Fig. 7. A specification_length item shows the length (byte count) of the following descriptor structure, excluding that of the specification_length item itself. A system_id item is used for discriminating the broadcasting systems which the tuner subunit supports, and is specified as shown in Fig. 9. When the system_id item is set to 10h, an analog video broadcasting system is used. When the system_id item is set to llh, an analog audio broadcasting system is used. When the system_id item is set to 20h, a digital video broadcasting (DVB) system is used. A system_id item of 21h is reserved for a digital audio broadcasting (DAB) system. A system_id item of 22h is also reserved for a digital television (DTV). All the other values are reserved for future specifications.

An implementation_profile_id item indicates a profile id to be executed in the system id. A number_of_subsystem_label item shows the number of service providers which the tuner handles. A sub_system_label_length item indicates the byte count of the following sub_system_label item. The sub_system_label item is used for discriminating service providers, and corresponds, for example, to "PerfecTV" and "Canal Plus" in the DVB system. A number_of_antennas item indicates the number of antennas which can be used for the broadcasting system. An antenna_specification item shows the specification of an antenna. A system_specific_information length item indicates the byte count of the following system_specific_information item. The system_specific_information item shows clear information of the broadcasting system.

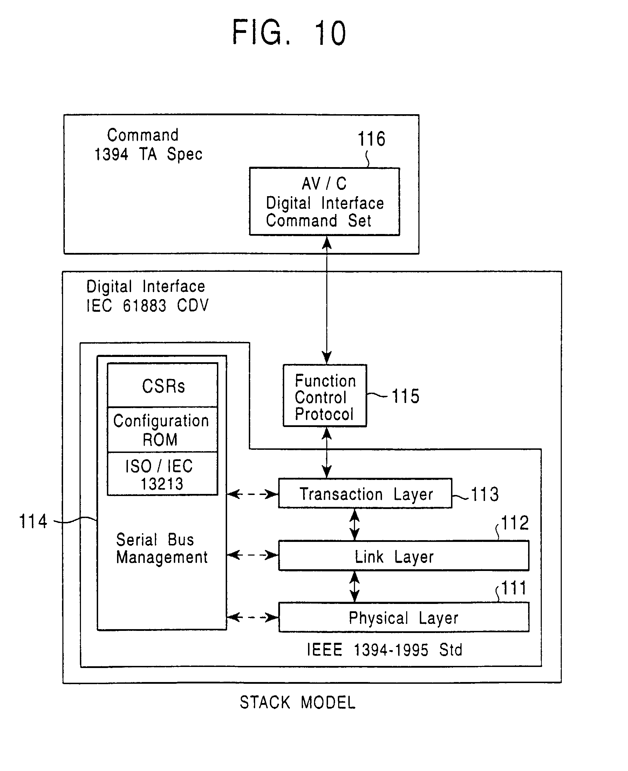

The AV/C command set used in the information processing system shown in Fig. 1 will be described below by referring to Figs. 10 to 15. Fig. 10 shows a stack model of the AV/C command set. As shown in Fig. 10, a physical layer 111, a link layer 112, a transaction layer 113, and serial bus management 114 conform to IEEE 1394. A function control protocol (FCP) 115 conforms to IEC 61883. An AV/C command set 116 conforms to a 1394 TA specification.

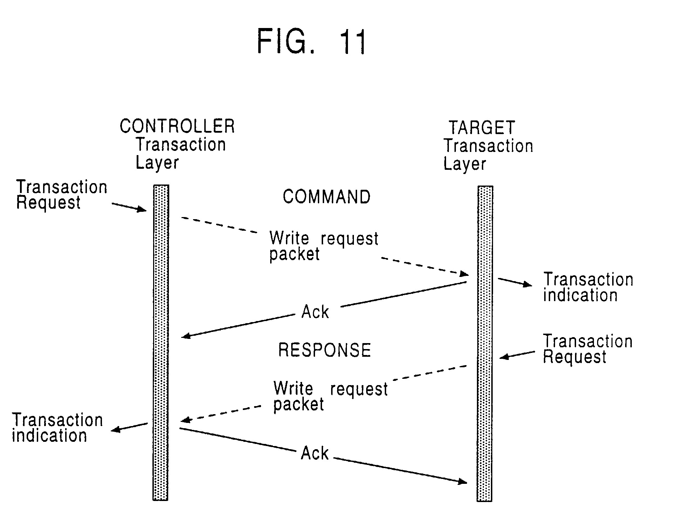

Fig. 11 is a view showing commands and responses of the FCP 115 shown in Fig. 10. The FCP is a protocol for controlling AV units on IEEE 1394. As shown in Fig. 11, a controlling unit is called a controller and a controlled unit is called a target. FCP commands and responses are transferred between nodes with the use of write transactions in IEEE 1394 asynchronous communication. When the target receives data, it sends back an acknowledgment to the controller for confirmation of receiving.

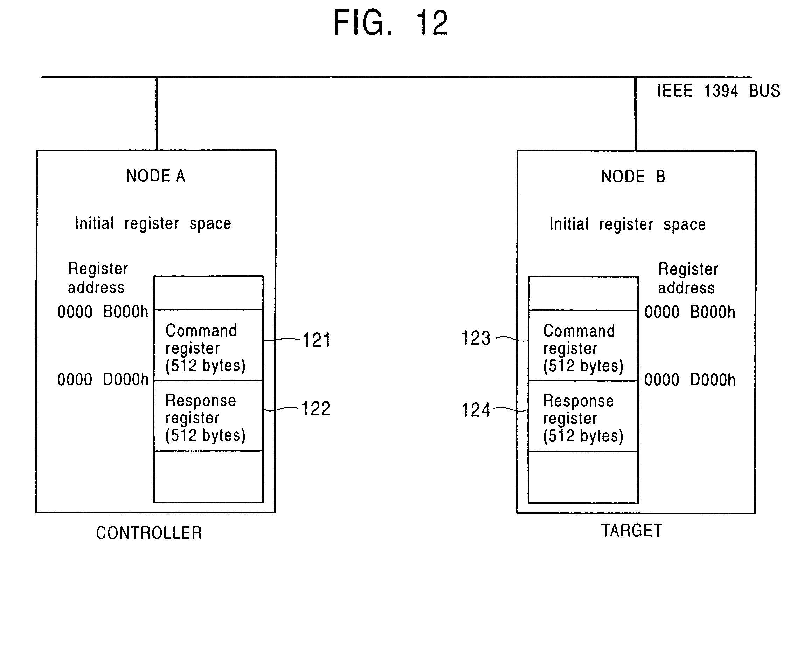

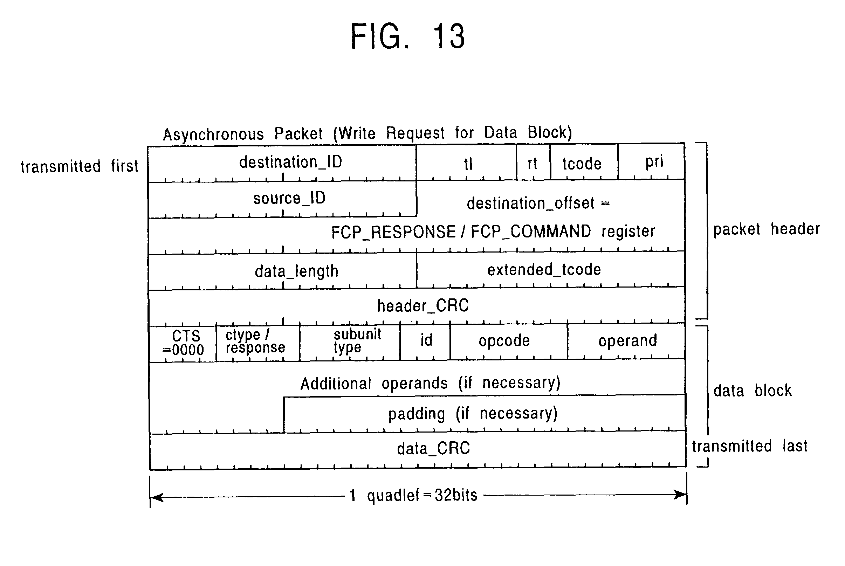

Fig. 12 is a view showing a further detailed relationship between FCP commands and responses. A node A is connected to a node B through an IEEE 1394 bus. The node A serves as a controller, and the node B serves as a target. Each of the node A and the node B is provided with a 512-byte command register and a 512-byte response register. As shown in Fig. 12, the controller writes a command message into a command register 123 of the target to notify of the instruction. Conversely, the target writes a response message into a response register 122 of the controller to notify of the response. With a pair of these two messages, control information is transferred. The type of a command set transmitted in the FCP is indicated in a CTS field among data fields shown in Fig. 13.

Fig. 13 shows a data structure of an asynchronous packet in an AV/C command. The AV/C command set is used for controlling an AV unit and has a CTS field (command set ID) of 0000. An AV/C command frame and a response frame are transferred between nodes with the use of the FCP. To apply no load to the bus and the AV units, it is determined that a response should be sent within 100 ms from when a command is received. As shown in Fig. 13, data in an asynchronous packet is formed of 32 bits (one quadlet) in the horizontal direction. The upper part of the packet in the figure shows a packet header and the lower part of the packet shows a data block. A destination_ID field indicates the destination.

The CTS field indicates a command-set ID. For the AV/C command set, the CTS field is set to 0000. A ctype/response field shows the function type of a command when the packet has a command, and shows the processing result of the received command when the packet has a response. Commands are roughly divided into four types, (1) CONTROL commands for controlling a function externally, (2) STATUS commands for inquiring a status externally, (3) GENERAL INQUIRY command (inquiring whether an opcode is supported) and SPECIFIC INQUIRY commands (inquiring whether an opcode and operands are supported) for externally inquiring whether a control command is supported, and (4) NOTIFY commands for requesting a change of the state to be report to the outside.

A response is sent back according to the type of a command. Responses to a CONTROL command include "NOT IMPLEMENTED," "ACCEPTED," "REJECTED," and "INTERIM." Responses to a STATUS command include "NOT IMPLEMENTED," "REJECTED," "IN TRANSITION," and "STABLE." Responses to a GENERAL INQUIRY command and a SPECIFIC INQUIRY command include "IMPLEMENTED" and "NOT IMPLEMENTED." Reponses to a NOTIFY command include "NOT IMPLEMENTED," "REJECTED," "INTERIM," and "CHANGED."

A subunit_type field identifies a function in the unit, and can be "tape recorder/player," or "tuner," for example. To discriminate a plurality of subunits of the same type, a subunit id field is used for addressing as an identification number. An opcode field shows a command. An operand field indicates a parameter of the command. An additional operands field is added as required. A padding field is also added as required. A data cyclic redundancy check (CRC) field is used for checking an error during data transfer.

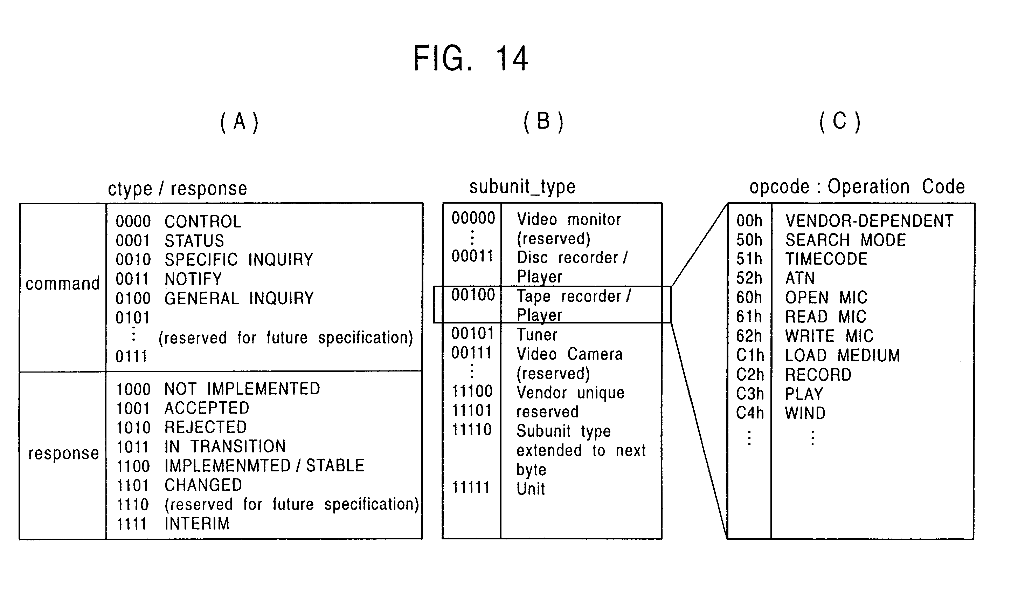

Fig. 14 shows AV/C command examples. Examples in the ctype/response field are shown in a list A of Fig. 14. The upper section indicates commands and the lower section indicates responses. A code of 0000 is assigned to a CONTROL command, 0001 to a STATUS command, 0010 is to a SPECIFIC INQUIRY command, 0011 to a NOTIFY command, and 0100 to a GENERAL INQUIRY command. Codes from 0101 to 0111 are reserved for future specifications. A code of 1000 is assigned to "NOT IMPLEMENTED," 1001 to "ACCEPTED," 1010 to "REJECTED," 1011 to "IN TRANSITION," and 1100 to "IMPLEMENTED/STABLE," 1101 to "CHANGED,", and 1111 to "INTERIM." A code of 1110 is reserved for a future specification.

Examples in the subunit_type field are shown in a list B of Fig. 14. A code of 00000 is assigned to "video monitor," 00011 to "disk recorder/player," 00100 to "tape recorder/player," 00101 to "tuner," 00111 to "video camera," 11100 to "vendor unique," and 11110 to a subunit type extended to the next byte. A code of 11111 is assigned to the unit, which means that a command or a response is sent to the unit itself, for example, in a case in which the power source is turned on or off.

Examples of the opcode field are shown in a list C of Fig. 14. One opcode table corresponds to each subunit type. An opcode field for a subunit_type field of tape recorder/player is shown in the figure. An operand is defined for each opcode. An opcode of 00h is assigned to "VENDOR-DEPENDENT," 50h to "SEARCH MODE," 51h to "TIMECODE," 52h to "ATN," 60h to "OPEN MIC," 61h to "READ MIC," 62h to "WRITE MIC," C1h to "LOAD MEDIUM," C2h to "RECORD," C3h to "PLAY," and C4h to "WIND."

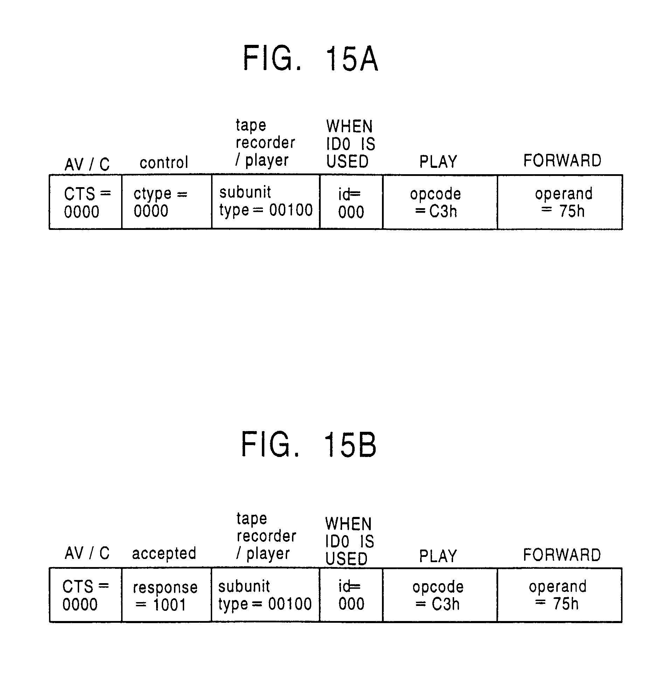

Figs. 15A and 15B show an example of an AV/C command and a response. To play the DVCR 3 (target) shown in Fig. 1, for example, the controller sends a command shown in Fig. 15A to the target. Since the AV/C command set is used in this command, the CTS field is set to 0000. The ctype field is set to 0000 to use a CONTROL command, which controls a function externally (see the list A of Fig. 14). The subunit_type field is set to 00100 since the type is tape recorder/player (see the list B of Fig. 14). The id field is set to 000 to show ID0. The opcode field is set to C3h, which indicates play (see the list C of Fig. 14). The operand field is set to 75h, which shows FORWARD. When the target is played, it sends back a response shown in Fig. 15B to the controller. The response field is set to 1001 to show that the command has been accepted (see the list A of Fig. 14). Since the fields other than the response field have the same codes as those shown in Fig. 15A, descriptions thereof are omitted.

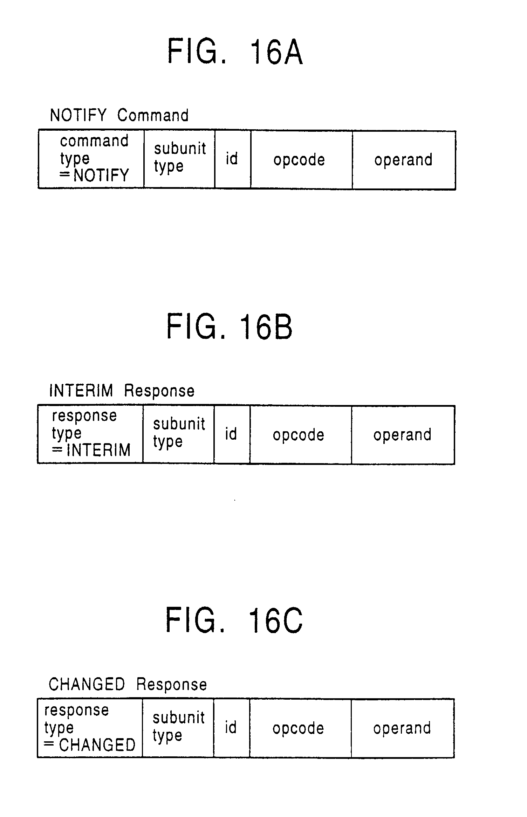

Figs. 16A to 16C show a NOTIFY command and responses. A NOTIFY command (shown in Fig. 16A) requests that a status change be reported to the outside. With the use of this command, a change of the subunit identifier descriptor of the target unit is detected. When the target unit receives a NOTIFY command, it sends back an INTERIM response (shown in Fig. 16B) to the controller. If the subunit identifier descriptor of the target unit is actually changed, the target unit sends back a CHANGED response (shown in Fig. 16C) to the controller.

Operations of the controller unit and the target unit shown in Fig. 1 in accordance with the preferred embodiment will be described below by referring to Fig. 17 and Fig. 18. Fig. 17 is a flowchart of processing in the controller unit. When the processing in the controller unit starts, the control section 13 of the tuner 2 reads the subunit identifier descriptor 71 of the DVCR 3 through the IEEE 1394 bus 4 in a step S1, and the procedure proceeds to a step S2. In the step S2, the control section 13 determines whether the DVCR 3 is an AV unit of new type (whether it has the descriptor shown in Fig. 6). When it is determined in the step S2 that the DVCR 3 is an AV unit of old type (that it has the descriptor shown in Fig. 3), the processing is finished.

When it is determined in the step S2 that the DVCR 3 is a new-type unit, the control section 13 sends a NOTIFY command (shown in Fig. 16A) to the DVCR 3 in a step S3. In a step S4, the control section 13 receives an INTERIM response (shown in Fig. 16B) from the DVCR 3, which indicates that the DVCR 3 has received the NOTIFY command. The control section 13 determines in a step S5 whether it receives a CHANGED response (shown in Fig. 16C), which shows that a function has been changed. If it is determined in the step S5 that a CHANGED response has not been received, this step is repeated. When it is determined in the step S5 that a CHANGED response has been received, the processing returns to the step S1, and the subsequent steps are repeated.

Fig. 18 is a flowchart of processing in the target unit. When the processing in the target unit starts, the control section 21 of the DVCR 3 determines in a step S21 whether a function has been changed. If it is determined in the step S21 that a function is not changed, this step is repeated. When it is determined in the step S21 that a function has been changed, the processing proceeds to a step S22.

In the step S22, the control section 21 updates the subunit identifier descriptor 71 according to the change in function, and the processing proceeds to a step S23. The control section 21 determines in the step S23 whether it reports the function change to an old-type unit in addition to a new-type unit. When it is determined in the step S23 that the function change is to be reported to an old-type unit in addition to a new-type unit, the control section 21 controls the 1394 interface section 22 so as to generate a bus reset in a step S24. With this reset, an old-type unit not shown in addition to the tuner 2 read the updated subunit identifier descriptor 71, and the processing is finished.

When it is determined in the step S23 that the function change is not to be reported to an old-type unit, the control section 21 determines in a step S25 whether it has received a NOTIFY command from the tuner 2. When it is determined in the step S25 that a NOTIFY command has not been received, the processing is finished. When it is determined in the step S25 that a NOTIFY command has been received, the control section 21 sends a CHANGED response to the tuner 2 in a step S26 and the processing is finished.

In the present embodiment, the DVCR is taken as an example of the target AV unit in which a function is changed. The present invention can also be applied to other AV units such as a CD deck unit.

In the present specification, providing media which provide the user with a computer program that executes the above processing include information recording media such as magnetic disks and CD-ROMs and network transfer media such as the Internet and digital satellites.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus connectable to any other information processing apparatus through a bus, comprising:
storage means for storing a function;
updating means for updating the contents of said storage means according to a change of the function; and
reporting means for reporting to the any other information apparatus that said updating means has updated the contents of said storage means.

2. An information processing apparatus according to Claim 1, further comprising storage means for storing information indicating whether the function is changed.

3. An information processing apparatus according to Claim 1, wherein said reporting means reports to the any other information apparatus that the contents of said storage means have been updated, by writing information based on the updating of the contents of said storage means into prescribed storage means of the any other information apparatus.

4. An information processing apparatus according to Claim 1, wherein said reporting means reports to the any other information apparatus that the contents of said storage means have been updated, by resetting the bus.

5. An information processing method for an information processing apparatus connectable to any other information processing apparatus through a bus, comprising:
a storage step for storing a function;
an updating step for updating the contents stored in said storage step, according to a change of the function; and
a reporting step for reporting to the any other information processing apparatus that the contents stored in said storage step have been updated in said updating step.

6. An information processing method according to Claim 5, wherein the any other information processing apparatus is notified that the contents stored in said storage step have been updated, in said reporting step by writing information based on the updating of the contents stored in said storage step into prescribed storage means of the any other information apparatus.

7. An information processing method according to Claim 5, wherein the any other information processing apparatus is notified that the contents stored in said storage step have been updated, in said reporting step by resetting the bus.

8. A providing medium for providing a program which makes an information processing apparatus connected to any other information processing apparatus through a bus execute processing, the processing comprising:
a storage step for storing a function;
an updating step for updating the contents stored in said storage step, according to a change of the function; and
a reporting step for reporting to the any other information processing apparatus that the contents stored in said storage step have been updated in said updating step.

9. A computer program for making an information processing apparatus connected to any other information processing apparatus through a bus execute processing, the processing comprising:
a storage step for storing a function;
an updating step for updating the contents stored in said storage step, according to a change of the function; and
a reporting step for reporting to the any other information processing apparatus that the contents stored in said storage step have been updated in said updating step.

10. An information processing apparatus connectable to any other information processing apparatus through a bus, comprising:
inquiry means for inquiring of the any other information processing apparatus whether a function of the any other information processing apparatus has been changed; and
receiving means for receiving the acknowledgment of the inquiry sent from said inquiry means, from the any other information processing apparatus.

11. An information processing apparatus according to Claim 10, further comprising inquiry means for inquiring of the any other information processing apparatus whether a function of the any other information processing apparatus is changed.

12. An information processing apparatus according to Claim 10, wherein said inquiry means performs the inquiry by writing an inquiry command into prescribed storage means of the any other information apparatus.

13. An information processing method for an information processing apparatus connectable to any other information processing apparatus through a bus, comprising:
an inquiry step for inquiring of the any other information processing apparatus whether a function of the any other information processing apparatus has been changed; and
a receiving step for receiving the acknowledgment of the inquiry sent in said inquiry step, from the any other information processing apparatus.

14. An information processing method according to Claim 13, further comprising an inquiry step for inquiring of the any other information processing apparatus whether a function of the any other information processing apparatus is changed.

15. An information processing method according to Claim 13, wherein the inquiry is performed in said inquiry step by writing an inquiry command into prescribed storage means of the any other information apparatus.

16. A providing medium for providing a program which makes an information processing apparatus connected to any other information processing apparatus through a bus execute processing, the processing comprising:
an inquiry step for inquiring of the any other information processing apparatus whether a function of the any other information processing apparatus has been changed; and
a receiving step for receiving the acknowledgment of the inquiry sent in said inquiry step, from the any other information processing apparatus.

17. A providing medium for providing a program according to Claim 16, the processing further comprising an inquiry step for inquiring of the any other information processing apparatus whether a function of the any other information processing apparatus is changed.

18. A computer program for making an information processing apparatus connected to any other information processing apparatus through a bus execute processing, the processing comprising:
an inquiry step for inquiring of the any other information processing apparatus whether a function of the any other information processing apparatus has been changed; and
a receiving step for receiving the acknowledgment of the inquiry sent in said inquiry step, from the any other information processing apparatus.
